# EUROPÄISCHE PATENTSCHRIFT

(11) **EP 1 276 648 B1**
(45) Veröffentlichungstag und Bekanntmachung des Hinweises auf die Patenterteilung: **09.05.2012**
(21) Anmeldenummer: 01921170.5
(22) Anmeldetag: 09.03.2001
(51) Int. Cl.: B60S 1/38

(54) **BEFESTIGUNGSKLAMMER FÜR EIN WISCHBLATT SOWIE WISCHBLATT MIT BEFESTIGUNGSKLAMMER**
FASTENING CLAMP FOR A WIPER BLADE AND WIPER BLADE WITH A FASTENING CLAMP
CROCHET DE FIXATION POUR BALAI D'ESSUIE-GLACE ET BALAI D'ESSUIE-GLACE AVEC CROCHET DE FIXATION

(30) Priorität: 20.04.2000 DE 10008272
(43) Veröffentlichungstag der Anmeldung: 22.01.2003
(73) Patentinhaber: ROBERT BOSCH GMBH, 70442 Stuttgart (DE)
(72) Erfinder: HERINCKX, Dirk, B-3350 Linter (BE); LUYPAERTS, Edwin, B-2490 Balen (BE); ROEKENS, Jurgen, B-1820 Steenokkerseel (BE)
(86) Internationale Anmeldenummer: PCT/DE2001/000888
(87) Internationale Veröffentlichungsnummer: WO 2001/081136

(56) Entgegenhaltungen:
- DE-A- 19 522 273
- FR-A- 2 597 818
- US-A- 5 052 072
- US-A- 5 933 910

## Beschreibung

### Stand der Technik

Die Erfindung betrifft eine Kombination aus einer Befestigungsklammer, einem Wischblatt und einer Federleiste.

Das Wischblatt ist üblicherweise in einem Tragbügelgestell aufgenommen, das wiederum an einem Seheibenwischerarm befestigt ist. Die Befestigungsklammer dient dazu, das Wischblatt mit der darin angeordneten Federleiste lösbar an dem Tragbügelgestell zu befestigen, so daß bei einem Verschleiß des Wischblattes lediglich dieses und nicht das gesamte Tragbügelgestell mit dem Wischblatt ausgewechselt werden muß.

Die Befestigungsklammer hat dabei zwei Funktionen zu erfüllen. Zum einen soll sie das Wischblatt zuverlässig in dem Tragbügelgestell arretieren, wobei gleichzeitig ein Lösen ohne die Verwendung von Werkzeug möglich sein soll. Zum anderen soll die Befestigungsklammer die Federleiste, die einen gleichmäßigen Andruck des Wischblattes gegen die zu reinigende Scheibe gewährleistet, zwerlässig im Inneren des Wischblattes festlegen, so daß sie nicht herausrutschen kann.

Aus dem Stand der Technik bekannt sind Befestigungsklammern, die in geöffnetem Zustand auf das Wischblatt, aufgesetzt und anschließend dort zusammengepreßt werden. Dabei wird ein Teil des Materials des Wischblattes in eine Einschnürung an der Federleiste hineingedrückt, so daß diese im Wischblatt arretiert ist.

Darüber hinaus ist aus der FR-A-2 597 818 eine Kombination einer Befestigungsklammer, einem Wischblatt und einer Federleiste bekannt. Das Wischblatt weist hier eine Kopfleiste auf, die mit zwei einander gegenüberliegenden Nuten versehen ist wobei die Federleiste auf das Wischblatt aufgeschoben ist. Die Befestigungsklammer umfasst ein Basisteil, zwei Haltearme, die sich ausgehend von dem Basisteil erstrecken, und mindestens einen Schnapphaken, wobei jeder Haltearm an seinem freien Ende mit einer Umbiegung versehen ist, die in eine Nut der Federleiste eingreift. Das Basisteil ist mit einem Vorsprung versehen, der sich in derselben Richtung erstreckt wie die beiden Haltearme und ist einstückig mit dem Basisteil, als abgebogene Lasche ausgebildet, die in eine Aussparung der Federleiste eingreift.

Die Aufgabe der Erfindung besteht darin, eine Befestigungsklammer der eingangs genannten Art dahingehend zu verbessern, daß der Zusammenhalt zwischen dem Wischblatt, der Federleiste und der Befestigungsklammer verbessert ist. Die Aufgabe der Erfindung besteht auch darin, eine Befestigungsklammer der eingangs genannten Art dahingehend weiterzuentwickeln, daß sie leichter am Wischblatt befestigt werden kann.

### Vorteile der Erfindung

Eine Befestigungsklammer mit den Merkmalen des Patentanspruchs 1 ermöglicht es, die Federleiste in dem Wischblatt formschlüssig zu befestigen, nämlich mittels des Vorsprungs, der in eine geeignete Aussparung der Federleiste hineinragen kann. Somit ist eine Relativverschiebung zwischen Befestigungsklammer, Wischblatt und Federleiste ausgeschlossen. Der Vorsprung ist so ausgestaltet daß er beim Aufsetzen der Befestigungsklammer auf das Wischblatt deren Material durchschneidet, so daß keine Modifikation des Wischblattes gegenüber herkömmlichen Wischblättern erforderlich ist.

Der Vorsprung ist einstückig mit dem Basisteil ausgebildet. Dies verringert die Anzahl der erforderlichen Einzelteile, und der Vorsprung kann in demselben Arbeitsschritt ausgebildet werden, in welchem auch die Befestigungsklammer in ihre Form gebogen wird.

Vorzugsweise ist die abgebogene Lasche zur Stabilisierung mit einer Sicke versehen. Diese Sicke kann sich bis in das Basisteil erstrecken. Bei dieser Gestaltung ergibt sich mit minimalem Aufwand ein Vorsprung, der eine hohe Steifigkeit aufweist, so daß er beim Aufsetzen der Befestigungsklammer auf das Wischblatt zuverlässig das Wischblatt durchschneidet und in die Aussparung der Federleiste eingreift.

### Zeichnungen

Die Erfindung wird nachfolgend unter Bezugnahme auf verschiedene Ausführungsformen beschrieben, die in den beigefügten Zeichnungen dargestellt sind. In diesen zeigen:
- Fig. 1 in einer schematischen abgebrochenen Seitenansicht ein Wischblatt mit Befestigungsklammer gemäß einer ersten Ausführungsform der Erfindung;
- Fig. 2 eine schematische Draufsicht auf die in Fig. 1 gezeigte Baugruppe;
- Fig. 3 einen Querschnitt entlang der Ebene III-III von Fig. 1;
- Fig. 4 einen Querschnitt entlang der Ebene IV-IV von Fig. 1;
- Fig. 5 eine perspektivische Ansicht der bei der Baugruppe von Fig. 1 verwendeten Befestigungsklammer,
- Fig. 6 eine Draufsicht der Befestigungsklammer von Fig. 5;
- Fig. 7 einen Querschnitt entlang der Ebene VII-VII von Fig. 6;
- Fig. 8 eine Seitenansicht der Befestigungsklammer von Fig. 5;
- Fig. 9 eine Vorderansicht der Befestigungsklammer von Fig. 5;
- Fig. 10 eine Rückansicht der Befestigungsklammer von Fig. 5;
- Fig. 10a in einer Ansicht entsprechend Fig. 10 die Befestigungsklammer in ihrem Zustand vor der Montage an einem Wischblatt;

### Beschreibung der Ausführungsbeispiele

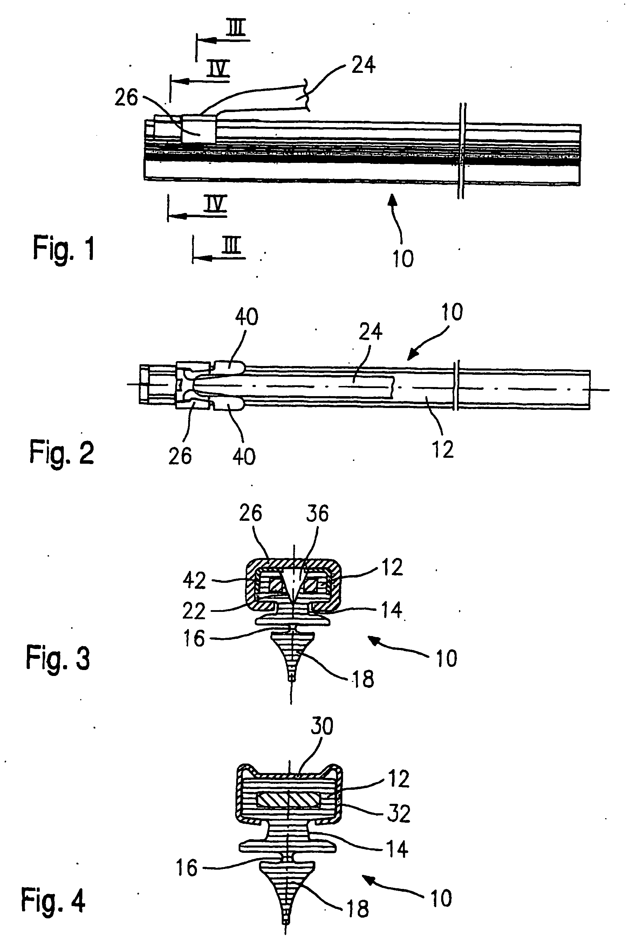

In den Fig. 1 bis 10 sind ein Wischblatt mit Federleiste und Befestigungsklammer gemäß einer ersten Ausführungsform der Erfindung gezeigt.

Das Wischblatt 10 besteht aus einem geeigneten Gummimaterial und weist eine Kopfleiste 12 auf, die mit zwei einander gegenüberliegenden Nuten 14 versehen ist. Ausgehend von der Kopfleiste erstreckt sich ein Kippsteg 16, der eine Wischlippe 18 mit der Kopfleiste 12 verbindet.

Im Inneren der Kopfleiste 12 ist eine Federleiste 20 angeordnet, die zur Stabilisierung und gleichmäßigen Druckverteilung dient. Die Federleiste 20, die aus einem geeigneten Metall besteht, ist an mindestens einem Ende mit einer Aussparung 22 versehen, deren Funktion später erläutert wird.

Das Wischblatt wird in bekannter Weise gegen eine zu reinigende Schei be von einem Tragbügelgestell 24 gedrückt, das in Fig. 1 nur ausschnittsweise dargestellt ist. Das Tragbügelgestell weist an einem Ende eine Haltekralle 26 auf, in der das entsprechende Ende des Wischblattes arretiert ist. Zu diesem Zweck wird eine Befestigungsklammer 28 verwendet, die nachfolgend beschrieben wird.

Die Befestigungsklammer 28 ist ein Blechbiegeteil, das aus einem Material mit Federeigenschaften besteht. Vorzugsweise wird das Material 1.4310 mit einer Dicke von etwa 0,3 mm verwendet, dessen Zugfestigkeit auf 1.100 bis 1.300 N/mm² verringert wurde.

Die Befestigungsklammer 28 weist ein Basisteil 30 auf, von dem ausgehend sich zwei einander gegenüberliegende Haltearme 32 erstrecken. Jeder Haltearm 32 ist an seinem freien Ende mit einer Umbiegung 34 versehen, die dafür vorgesehen ist, in die Nut 14 des Wischblattes 10 einzugreifen.

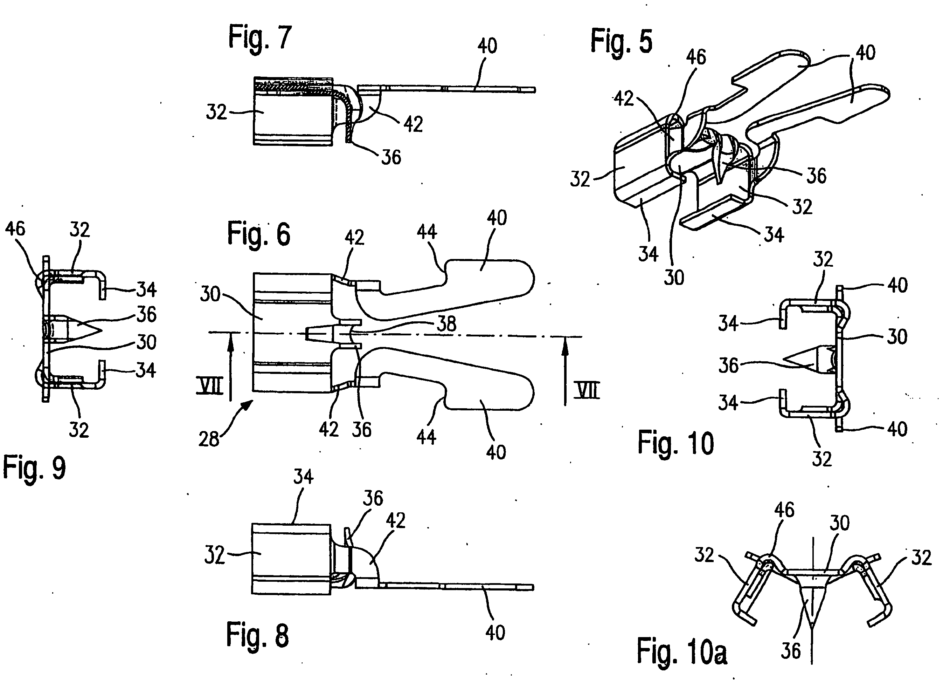

Ausgehend von dem Basisteil 30 erstreckt sich ein Vorsprung, der als umgebogene Lasche 36 ausgebindet ist. Die Lasche 36 ist einstückig mit dem Basisteil 30 ausgebildet und so ausgestanzt, daß sie an ihrem freien Ende spitz zuläuft. Zur Erhöhung der Stabilität ist eine Sicke 38 vorgesehen, die sich über die gesamte Lasche 36 und die Biegestelle zwischen Lasche und Basisteil bis in das Basisteil hinein erstreckt. Aufgrund der Sicke hat die Lasche 36 einen rinnenförmigen Querschnitt (siehe beispielsweise Fig. 6).

Die Befestigungsklammer 28 ist mit zwei Schnapphaken 40 versehen, die sich jeweils etwa in der Ebene des Basisteils 30 erstrecken. Jeder Schnapphaken ist mit einem der beiden Haltearme 32 durch einen Übergangsabschnitt 42 verbunden, der sich jeweils etwa in der Ebene des entsprechenden Haltearme erstreckt. Aufgrund ihrer Anbindung an den Haltearmen 32 können die Schnapphaken aus ihrer beispielsweise in Fig. 6 gezeigten Stellung zusammengedrückt werden, woraufhin sie wieder elastisch in Richtung zur Ausgangsstellung zurückfedern.

Die Herstellung der beschriebenen Befestigungsklammer geschieht in der folgenden Weise: Ein Stanzteil, bestehend aus dem oben genannten Material, wird geeignet gebogen, so daß die durch die Sicke 38 versteifte Lasche 36 um etwa 90° aus der Ebene des Basisteils 30 abgebogen wird. Die Haltearme 32 werden bereits vorgebogen, so daß sie die in Fig. 10a dargestellte Ausrichtung haben. Im Anschluß an den Biegevorgang wird die Befestigungsklammer bei einer Temperatur von etwa 380 bis 400 °C für eine Zeitdauer von ca. 1 Stunde angelassen, um die Zugfestigkeit zu erhöhen. Aufgrund dieser Maßnahme und aufgrund der geometrischen Form hat die Lasche 36 eine sehr hohe Festigkeit.

Vor der Montage der Befestigungsklammer 28 am Wischblatt 10 wird in dieses die Federleiste 20 eingeschoben. Dann wird die Befestigungsklammer 28 so auf das Wischblatt aufgedrückt, daß die Lasche 36 das Material des Wischblattes durchschneidet und in die Aussparung 22 der Federleiste 20 eingreift. Anschließend werden die Haltearme 32 zusammengebogen, so daß die in beispielsweise Fig. 4 gezeigte Anordnung erreicht ist, in der die Haltearme die Befestigungsklammer fest an dem Wischblatt halten. Durch den formschlüssigen Eingriff der Lasche 36 der Befestigungsklammer in sowohl den Wischgummi selbst als auch die Federleiste sind die drei Bauteile fest miteinander verbunden.

Wenn das derart vormontierte Wischblatt an dem Tragbügelgestell 24 montiert werden soll, wird es so in dieses eingeschoben, daß zuerst die beiden Schnapphaken durch die Haltekralle 26 hindurchtreten. Zu diesem Zweck federn sie elastisch nach innen. Sobald die Schnapphaken weit genug in die Haltekralle eingeschoben sind, federn sie wieder nach außen, so daß die Haltekralle zwischen einer Anlagekante 44 an dem Schnapphaken und zwei gebogenen Anlageflächen 46 arretiert ist, die im Bereich des Übergangs zwischen dem Basisteil 30 und dem entsprechenden Haltearm 32 ausgebildet sind. Wenn das Wischblatt vom Tragbügelgestell entfernt werden soll, müssen lediglich die beiden Schnapphaken 40 manuell zusammengedrückt werden, so daß die Anlagekanten 44 nach innen verstellt werden und die Schnapphaken aus der Haltekralle herausgezogen werden können.

## Patentansprüche

1. Befestigungsklammer, Wischblatt (10) und Federleiste (20),
wobei das Wischblatt (10) eine Kopfleiste (12) aufweist,
die mit zwei einander gegenüberliegenden Nuten (14) versehen ist,
wobei die Federleiste (20) im Inneren der Kopfleiste (12) angeordnet ist und
in das Wischblatt (10) eingeschoben ist
und wobei die Befestigungsklammer ein Basisteil (30), zwei Haltearme (32), die sich ausgehend von dem Basisteil (30) erstrecken,
und mindestens einen Schnapphaken (40) umfasst
und wobei jeder Haltearm (32) an seinem freien Ende mit einer Umbiegung (34) versehen ist,
die in eine der Nuten (14) eingreift,
wobei das Basisteil (3) mit einem Vorsprung (36, 136, 236) versehen ist,
der sich in derselben Richtung erstreckt wie die beiden Haltearme (32) und der einstückig mit dem Basisteil (30) als abgebogene Lasche (36) ausgebildet ist,
wobei die Lasche (36) an ihrem freien Ende spitz zuläuft und
beim Aufsetzen der Befestigungsklammer auf das Wischblatt (10) dessen Material durchschneidet und
in eine Aussparung (22) der Federleiste (20) eingreift,
die zur Stabilisierung und gleichmässigen Druckverteilung des Wischblatts (10) dient.

2. Befestigungsklammer nach Anspruch 1, **dadurch gekennzeichnet, dass** die Lasche (36) mit einer Sicke (38) versehen ist

3. Befesdgungsklammer nach Anspruch 2, **dadurch gekennzeichnet, dass** die Sicke (38) sich bis in das Basisteil (30) erstreckt.

4. Befestigungsklammer nach einem der vorhergehenden Ansprüche, **dadurch gekennzeichnet, dass** zwei Schnapphaken (40) vorgesehen sind, die einander gegenüberliegen und sich in etwa derselben Ebene erstrecken wie das Basisteil.

5. Befestigungsklammer nach Anspruch 4, **dadurch gekennzeichnet, dass** jeder Schnapphaken (40) sich ausgehend von einem Haltearm (32) erstreckt.

## Claims

1. Fastening clamp, wiper blade (10) and spring strip (20),
wherein the wiper blade (10) has a head strip (12) which is provided with two mutually opposite grooves (14), wherein the spring strip (20) is arranged in the interior of the head strip (12) and is pushed into the wiper blade (10), and wherein the fastening clamp comprises a base part (30), two retaining arms (32) which extend from the base part (30) and at least one snap-on hook (40), and wherein the free end of each retaining arm (32) is provided with a bent-around portion (34) which engages in one of the grooves (14), wherein the base part (30) is provided with a projection (36, 136, 236) which extends in the same direction as the two retaining arms (32) and which is formed integrally with the base part (30) as a bent-down tab (36), wherein the free end of the tab (36) converges to a point and, when the fastening clamp is placed onto the wiper blade (10), cuts through the material of the latter and engages in a recess (22) of the spring strip (20) which serves for the stabilization and uniform pressure distribution of the wiper blade (10).

2. Fastening clamp according to Claim 1, **characterized in that** the tab (36) is provided with a bead (38).

3. Fastening clamp according to Claim 2, **characterized in that** the bead (38) extends into the base part (30).

4. Fastening clamp according to one of the preceding claims, **characterized in that** two snap-on hooks (40) are provided, the snap-on hooks lying opposite each other and extending in approximately the same plane as the base part.

5. Fastening clamp according to Claim 4, **characterized in that** each snap-on hook (40) extends from a retaining arm (32).

## Revendications

1. Crochet de fixation, balai d'essuie-glace (10) et raclette élastique (20),
dans lequel le balai d'essuie-glace (10) comprend une raclette de tête (12)
qui est pourvue de deux rainures (14) opposées l'une à l'autre,
dans lequel la raclette élastique (20) est disposée à l'intérieur de la raclette de tête (12) et
est insérée dans le balai d'essuie-glace (10),
et dans lequel le crochet de fixation comporte une partie de base (30), deux bras de retenue (32) qui s'étendent à partir de la partie de base (30), et au moins une agrafe d'encliquetage (40),
et dans lequel chaque bras de retenue (32) est pourvu, au niveau de son extrémité libre, d'une courbure (34)
qui s'engage dans l'une des rainures (14),
dans lequel la partie de base (30) est pourvue d'une saillie (36, 136, 236)
qui s'étend dans la même direction que celle des deux bras de retenue (32) et
qui est réalisée d'une seule pièce avec la partie de base (30) en tant que patte pliée (36),
dans lequel la patte (36) se termine en pointe au niveau de son extrémité libre et,
lors du placement du crochet de fixation sur le balai d'essuie-glace (10), coupe le matériau de ce dernier, et
s'engage dans un évidement (22) de la raclette élastique (20),
laquelle baguette élastique sert à la stabilisation et à la répartition régulière de la pression du balai d'essuie-glace (10).

2. Crochet de fixation selon la revendication 1, **caractérisé en ce que** la patte (36) est pourvue d'une moulure (38).

3. Crochet de fixation selon la revendication 2, **caractérisé en ce que** la moulure (38) s'étend jusque dans la partie de base (30).

4. Crochet de fixation selon l'une quelconque des revendications précédentes, **caractérisé en ce que** deux agrafes d'encliquetage (40) sont prévues, lesquelles sont opposées l'une à l'autre et s'étendent dans approximativement le même plan que celui de la partie de base.

5. Crochet de fixation selon la revendication 4, **caractérisé en ce que** chaque agrafe d'encliquetage (40) s'étend à partir d'un bras de retenue (32).
